# EUROPEAN PATENT SPECIFICATION

(11) **EP 1 179 512 B1**
(45) Date of publication and mention of the grant of the patent: **28.12.2011**
(21) Application number: 01119221.8
(22) Date of filing: 09.08.2001
(51) Int. Cl.: C03B 33/10

(54) **Cutter wheel, apparatus and method for scribing brittle materials**
Schneiderad, Vorrichtung und Verfahren zum Anreissen von sprödem Material
Roue de coupe, dispositif et procédé pour tracer des matériaux fragiles

(30) Priority: 11.08.2000 JP 2000244310
(43) Date of publication of application: 13.02.2002
(73) Proprietor: Mitsuboshi Diamond Industrial Co., Ltd., Suita-city, Osaka Pref. 564-0044 (JP)
(72) Inventor: Maekawa, Kazuya, c/o Mitsuboshi Diamond, Suita-city, Osaka Pref. 564-0044 (JP); Wakayama, Haruo, c/o Mitsuboshi Diamond, Suita-city, Osaka Pref. 564-0044 (JP)
(74) Representative: TBK

(56) References cited:
- US-A- 648 791
- US-A- 4 382 397
- US-A- 5 836 229
- PATENT ABSTRACTS OF JAPAN vol. 2000, no. 11, 3 January 2001 (2001-01-03) -& JP 2000 219527 A (MITSUBOSHI DIAMOND KOGYO KK), 8 August 2000 (2000-08-08)
- PATENT ABSTRACTS OF JAPAN vol. 1998, no. 13, 30 November 1998 (1998-11-30) -& JP 10 209086 A (MATSUSHITA ELECTRIC IND CO LTD), 7 August 1998 (1998-08-07)

## Description

### BACKGROUND OF THE INVENTION

### FIELD OF THE INVENTION

The present invention relates to a scribing method for forming scribe lines on a brittle plate such as a glass sheet, a semiconductor wafer and a ceramic plate according to claim 15, to a cutter wheel according to claim 1 used for such a method by rotating on such a brittle plate, to an apparatus according to claim 13 provided with such a cutter wheel, and to a cutter according to claim 14.

### DESCRIPTION OF PRIOR ART

A cutter wheel for brittle materials as disclosed in JP 2000219527 as prior art is produced by working a disk made of a cemented carbide alloy, sintered diamond or the like. The disk is ground at the outer periphery obliquely on the two sides to form a ridge having a V-shaped form. A rotational shaft is fixed to a shaft hole situated at the center of the disk, and the shaft is mounted rotatably in a mamual cutter wheel, or in a cutter head of an automatic scriber or the like. Accordingly, the cutter wheel is rotated on a brittle plate such as a glass sheet, a semiconductor wafer and a ceramic plate under a pressure to form scribe lines thereon.

However, such a conventional cutter wheel cannot generate deep vertical cracks inside a brittle sheet. Further, it is liable to slip on a brittle plate on scribing, and this abrades the edge. Residual stress is remained along scribe lines. Further, when the brittle sheet is cut along the scribe lines, unnecessary defects due to horizontal cracks are liable to be generated at the sections subjected to the cutting. This is a problem on the quality of brittle cutting.

This problem is partly solved by a cutter wheel disclosed in the United States Patent No. 5,836,229 assigned to the same assignee of this application. As shown in Fig. 1, the cutter wheel 1 has a disk with V-shaped bevel portions 2, and a ridge 3 between the bevel portions 2 having depressions 4 of microscopic sizes formed at an equal distance between them to provide protrusions 5 between them which contact a brittle sheet. It is possible by use of the wheel 1 to generate deep vertical cracks into a brittle sheet. Further, the residual stress is decreased, and the generation of unnecessary defects due to horizontal cracks along the scribe lines does not increase.

One of main uses of the cutter wheel is cutting of glass sheets used for flat display panels (FPD) such as liquid crystal display (hereinafter referred to LCD) panels. Recently, there are high demands for LCD panels of high quality. Therefore, it is required to suppress the generation of unnecessary horizontal cracks as much as possible.

### SUMMARY OF THE INVENTION

The object of the present invention is to provide a scribing method for brittle materials comprising a step of forming vertical cracks by use of a cutter wheel which comprises a disk with two side planes and an outer periphery between them, the outer periphery provided with two bevel portions, and a ridge portion between them of a polygon form.

Further, the object of the present invention is to provide a cutter wheel for brittle materials, which suppresses generation of horizontal cracks without affecting scribing performance, which comprises a disk with two side planes and an outer periphery between them, and the outer periphery comprising two bevel portions and a ridge portion between them of a polygon form. A cutter wheel for brittle materials in accordance with the present invention suppresses generation of horizontal cracks without affecting scribing performance.

The ridge portion comprises a plurality of peaks aligned along a circumferential line. For each pair of two adjacent peaks in the plurality of peaks the ridge portion except the peaks extends along or lower than a straight line connecting the two adjacent peaks. Preferably the peaks are arranged at an equal distance between them. For example, for each pair of two adjacent peaks, the ridge portion is a polygon form with vertices along the straight lines connecting the two adjacent peaks. Thus, the edge portion has a polygon shape. Alternatively, for each pair of two adjacent peaks, the ridge portion has a depression between the two adjacent peaks, and the depression extends lower than the straight line connecting the two adjacent peaks.

Also, the object of the present invention is to provide a scribing apparatus for forming scribe lines on brittle materials comprising such a cutter wheel as a scribing means.

The present invention provides an advantageous feature that generation of horizontal cracks is suppressed.

The object is solved by means of the cutter wheel according to claim 1, the apparatus according to claim 13, the cutter according to claim 14 or a method according to claim 14. Further developments are defined in the dependent claims.

### BRIEF DESCRIPTION OF THE DRAWINGS

These and other objects and features of the present invention will become clear from the following descriptions taken in conjunction with the preferred embodiments thereof with reference to the accompanying drawings, and in which:
Fig. 1 is a diagram for explaining a prior art cutter wheel;
Fig. 2 is a diagram of a cutter wheel of a first embodiment in accordance with the present invention;
Fig. 3 is a schematic front view of a machine for producing cutter wheels;
Fig. 4 is a diagram of a cutter wheel of a second embodiment in accordance with the invention;
Fig. 5 is a schematic front view of an automatic scriber having a general mechanism;
Fig. 6 is a side view of the automatic scriber;
Fig. 7 is a partially broken front view of a manual cutter;
Fig. 8 is a schematic front view of a device using a cutter wheel; and
Figs. 9A and 9B are schematic front views of other cutter wheels with shafts.

### DETAILED DESCRIPTION OF THE PREFERRED EMBODIMENTS

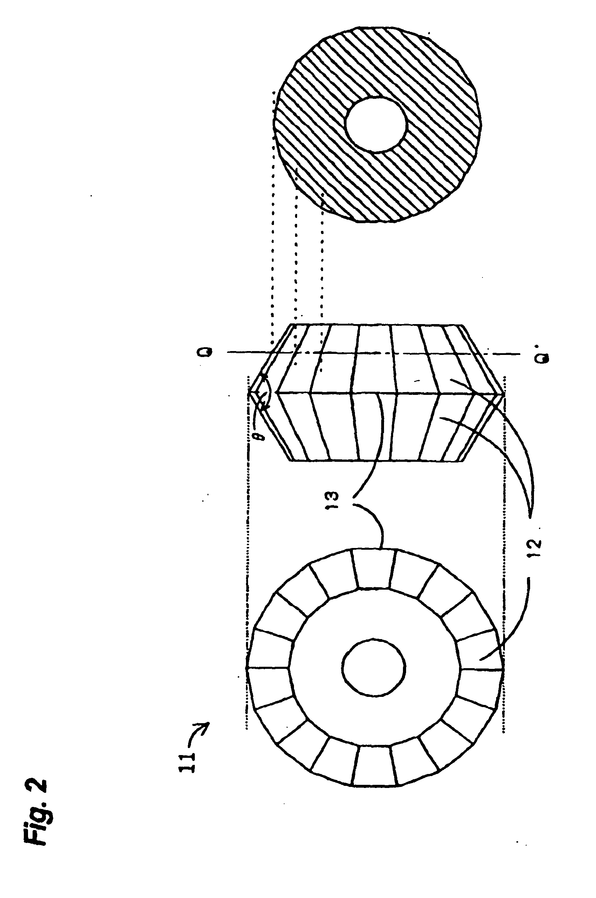

Referring now to the drawings, wherein similar reference numerals and characters designate similar or corresponding parts throughout the several views, Fig. 2 shows a cutter wheel 11 of a first embodiment in accordance with the present invention. Fig. 2 includes a side view on the left side, a front view in the center and a cross sectional view on the right side. The cutter wheel 11 has a disk with two side planes made of a cemented carbide alloy and the outer periphery thereof. The outer periphery has two bevel portions 12 and a V-shaped ridge 13 between them. The ridge 13 has a peak in contact with a brittle sheet for forming scribe lines. The ridge 13 has a shape of a regular polygon of sixty vertices when observed from a side of the wheel. For simplicity in Fig.2, the ridge 13 has a shape of a regular polygon of eighteen vertices. The two bevel portions 12 extending from a side of the polygon of the ridge 13 makes an angle θ of 125 degree in a section perpendicular to the disk. Any section in the bevel portions 12, including the ridge 13, has a form of a regular polygon of sixty vertices. Fig. 2 shows on the right side a cross sectional view of a polygon corresponding to the cross section obtained after cutting the cutter wheel along Q-Q' line in the front view situated in the center of Fig.2. The cutter wheel11 has a central hole for inserting a rotational shaft (not shown).

As will be explained below, the bevel portions 12 are formed by grinding, and this results in the above-mentioned ridge 13 having the form of the regular polygon of sixty vertices.

Fig. 2' shows on the right side a cross sectional view of a circle corresponding to the cross section obtained after cutting the cutter wheel along Q-Q' line in the front view situated in the center of Fig.2'. The cutter wheel 11' has a central hole for inserting a rotational shaft (not shown). The cutter wheel shown in Fig. 2' is obtained by working the circular ridge of a normal cutter wheel to form a polygon shape at the ridge.

The dimensions of the cutter wheel 11 are as follows.

Wheel diameter : 2.5 mm;

Wheel thickness: 0.65 mm;

Edge angle (θ) : 125 degree : and

Number of vertices of polygon: 60.

By using the cutter wheel 11, scribing is performed according to the following scribing data.

Edge load: 2.0 Kgf ;

Scribing speed: 300 mm/sec ; and

Thickness of glass plate: 0.7 mm.

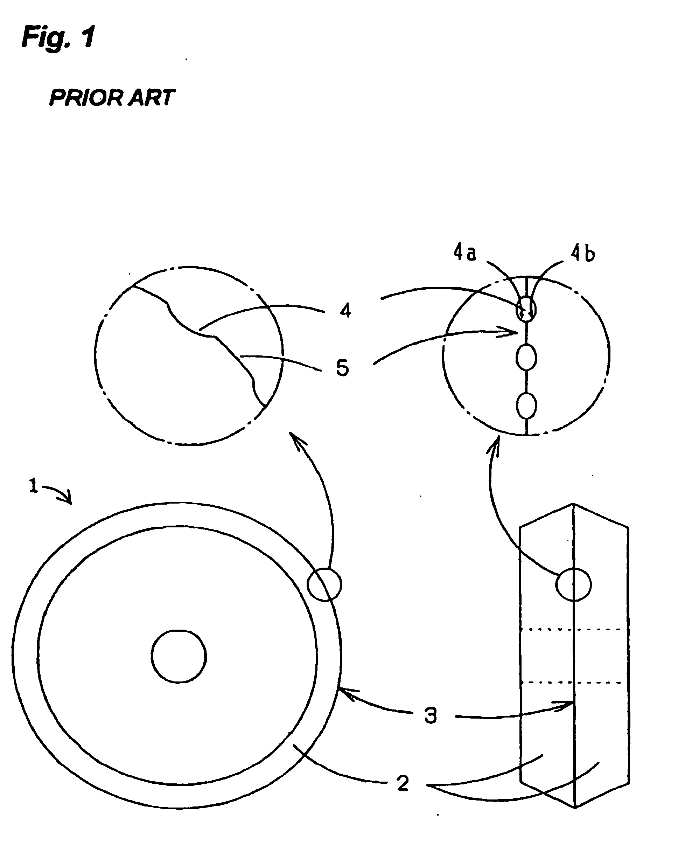

When the cutter wheel 11 is used according to the scribing data, the depth of vertical cracks is of the same order as that generated by the prior art cutter wheel 1 shown in Fig. 1, while the generation of horizontal cracks is suppressed more. As to the prior art cutter wheel shown in Fig. 1, it is understood that deep vertical cracks are generated due to impacts repeatedly generated many times when the protrusions 5 along the ridge strike the brittle plate at scribing. However, the protrusions 5 themselves are parts of a circumferential line which contacts the brittle plate, and it is further understood that portions 4a and 4b in Fig. 1 formed at the depressions 4 generate horizontal cracks. On the other hand, the generation of horizontal cracks is small for the cutter wheel 11 of this embodiment, and the reason is assumed as follows. The cutter wheel 11 gives an impact to the brittle plate at each vertex (peak) of the regular polygon along the ridge 13, but the vertex itself does not have a length along the direction of the ridge 13. Further, because the ridge 13 except the vertices consists of straight lines or sides of the regular polygon, the crack depth into the brittle plate by the linear portions becomes smaller. Thus, the generation of horizontal cracks is suppressed.

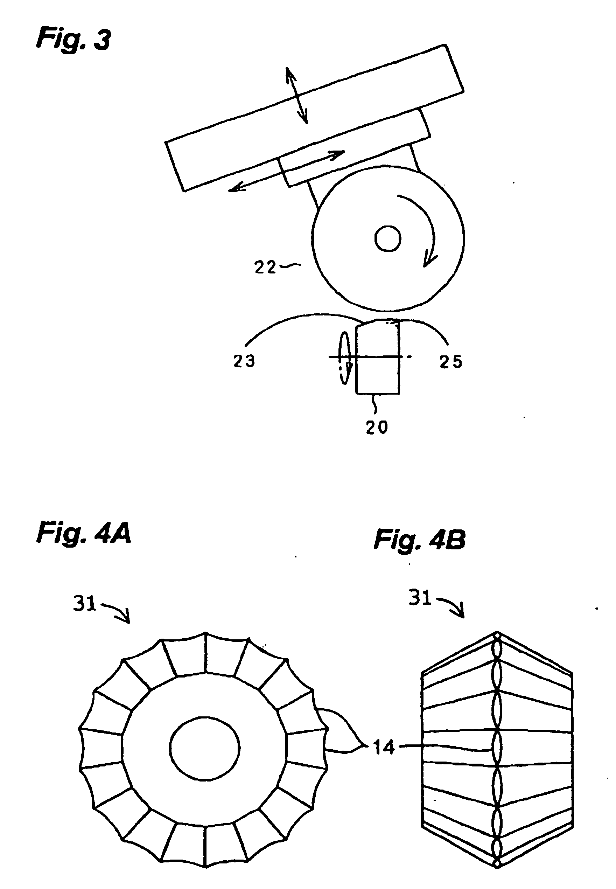

Fig. 3 shows a machine for fabricating the cutter wheel 11. A disk-like wheel 20 made of a cemented carbide alloy has a shaft (not shown) and the shaft is set rotatably. When a bevel plane is formed on the left side of the V-shaped ridge, the wheel 20 is fixed, and a grinder 22 is moved in a direction along the bevel plane to form a plane 23 including a side of the regular polygon with sixty vertices, and the plane 23 is polished. This is repeated each time the wheel 20 is rotated by 6 degree(=360/60), and sixty planes are formed on the left side of the V-shaped ridge. Thereafter, in order to form the other bevel planes on the right side, the wheel 20 is removed and reversed. Then, it is set again rotatably, and the position of the wheel 20 is determined according to working conditions by using an image processing system (not shown). Then, the grinder 22 is moved again similarly to form a plane 25 (represented by a dotted line) including a side of the regular polygon on the right side of the V-shaped ridge. This is repeated each time the wheel 20 is rotated by 6 dgree. Thus, a cutter wheel 11 is obtained to have the edge having a shape of a polygon with sixty vertices.

It is also possible to produce the cutter wheel 11 by using a prior art cutter wheel having a normal V-shaped ridge at an outer periphery. The prior art wheel is worked by the machine shown in Fig. 3 to grind the ridge portion and/or bevel portions as explained above.

Alternatively, electro-discharge machining may be used to fabricate the cutter wheel 11 instead of grinding carried out by the above-mentioned machine.

In this embodiment(Fig. 2), as explained above, the ridge 13 has a shape of a polygon when observed from a side of the cutter wheel. Then, an impact is given at each vertex of the polygon to a brittle plate, while unnecessary cracks are suppressed except the vertices. Therefore, the generation of horizontal cracks can be decreased.

Fig. 4 shows a cutter wheel 31 of a second embodiment in accordance with the invention. A depression 14 is formed along the ridge 13 for each side of the regular polygon with 60 vertices, similar to the depressions 4 of the prior art wheel shown in Fig. 1. The depressions 14 are formed to have a depth below a line or a side connecting adjacent two vertices of the regular polygon. For example, the depth of the depression 14 is about 0-20 % of the length of the side of the regular polygon. Thus, the cutter wheel 31 does not have linear portions along the ridge 13. The depressions 14 may be formed by using a thin disk-like grinder moved in a direction perpendicular to the disk, as disclosed in the United States Patent No. 5,836,229.

Fig. 4A' is a side view of a cutter wheel with a polygon shape at the ridge, and Fig. 4B' is a front view of the same. The cutter wheel 31' has a central hole for inserting a rotational shaft (not shown). The cutter wheel shown in Figs. 4A' and 4B' is obtained by working the ridge of a normal cutter wheel to form depression portions between edges of the vertices followed by formation of many vertices.

In the above-mentioned ridge 13 of the cutter wheel 11 shown in Fig. 2, the linear portions are provided except the vertices of the polygon, and the crack depth into the brittle plate is decreased. On the other hand, in the cutter wheel 31 shown in Fig. 4, the depressions are provided deeper than the linear portions in the cutter wheel 11. Thus, the depth of vertical cracks generated by the cutter wheel 31 under a smaller edge load is of the same order as that generated by the cutter wheel 11 shown in Fig. 2. On the other hand, because a smaller edge load to the brittle plate is impressed, the generation of horizontal cracks is suppressed more.

The above-mentioned dimensions of the cutter wheels 11 and 31 are exemplified data. Recommended dimensions of a general cutter wheel are shown below.

Wheel diameter: 1 - 20 mm.

Wheel thickness: 0.6 - 5 mm.

Edge angle (θ) : 90 - 160 degree.

Number of vertices of polygon: 16 - 300.
General scribing data are as follows.

Edge load: 0.8 - 60 Kgf.

Scribing speed: 50 - 1.000 mm/sec.

In this embodiment, as explained above, depressions are formed between the vertices. Therefore, necessary vertical cracks can be obtained by a smaller scribing load impressed at the ridge, while the generation of the horizontal cracks can be decreased more than the cutter wheel of the first embodiment.

The cutter wheel explained above is suitable for an automatic brittle scriber and a manual brittle cutter.

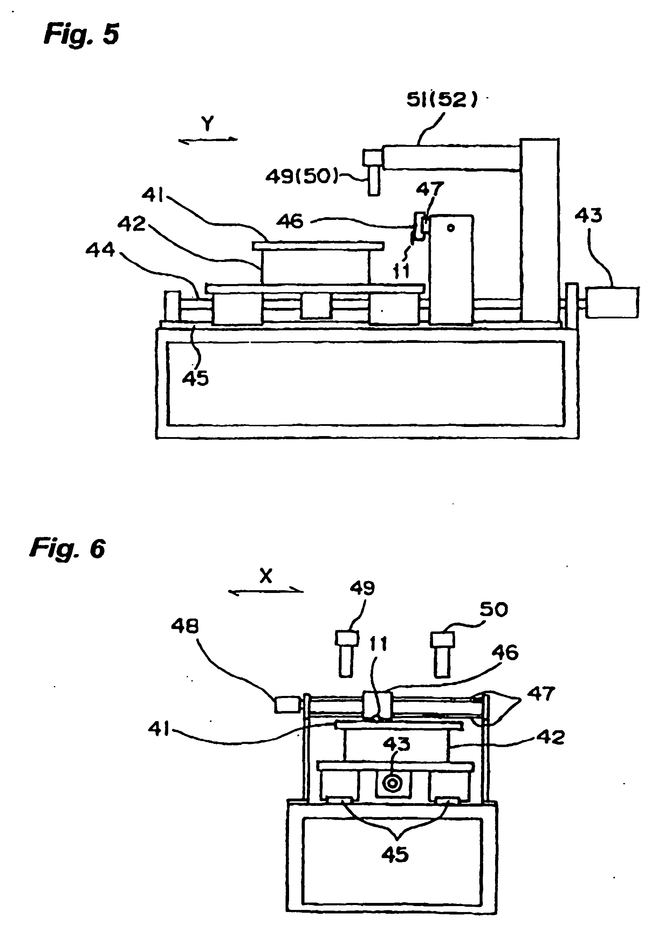

Figs. 5 and 6 are a front view and a side view of a general automatic brittle scriber. A table 41 for setting a brittle plate is rotated by a rotation table 42 in a horizontal plane, and it is moved a long rails 45 in Y direction (or left-to-right direction in Fig. 5) by a ball screw 44. On the other hand, a cutter head 46 is moved in X direction (or left-to-right direction in Fig. 6) along rails 47. The cutter head 46 has the cutter wheel 11 or 31 with a shaft fitted at the center thereof, and the shaft is supported rotatably at a lower end of the cutter head 46.

On scribing, each time the table 41 is moved in Y direction by a predetermined pitch, the cutter head 46 is moved in X direction. Thus the brittle plate is scribed in X direction. Next, after the table 41 is rotated by 90 degree, scribing is performed similarly. Thus the brittle plate is also scribed in Y direction.

The automatic brittle scriber explained above is an example of a scriber. The cutter wheel of the present invention can also be used in other types of scribers. For example, the cutter head 46 is fixed, and the table is moved in X and Y directions. Alternatively, the table 41 is fixed, and the cutter head 46 is moved in X and Y directions.

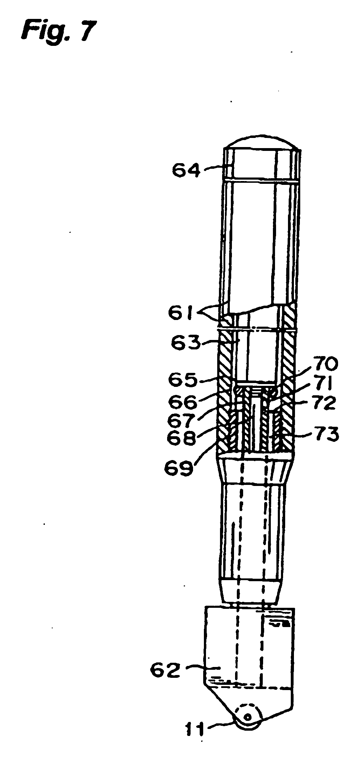

Fig. 7 shows the cutter wheel 11 or 31 mounted in a manual brittle cutter disclosed in the Japanese Utility Model Publication 62-23780. The brittle cutter has a cylindrical handle 61 for grip and a head 62 provided at a lower end thereof. The cutter wheel 11 or 31 with a shaft is mounted to the head rotatably around the shaft. Further, an oil chamber 63, a cap 64 thereof and a relevant mechanism 65-73 are provided in order to supply oil to the cutter wheel 11 or 31, but detailed explanations thereon are omitted here.

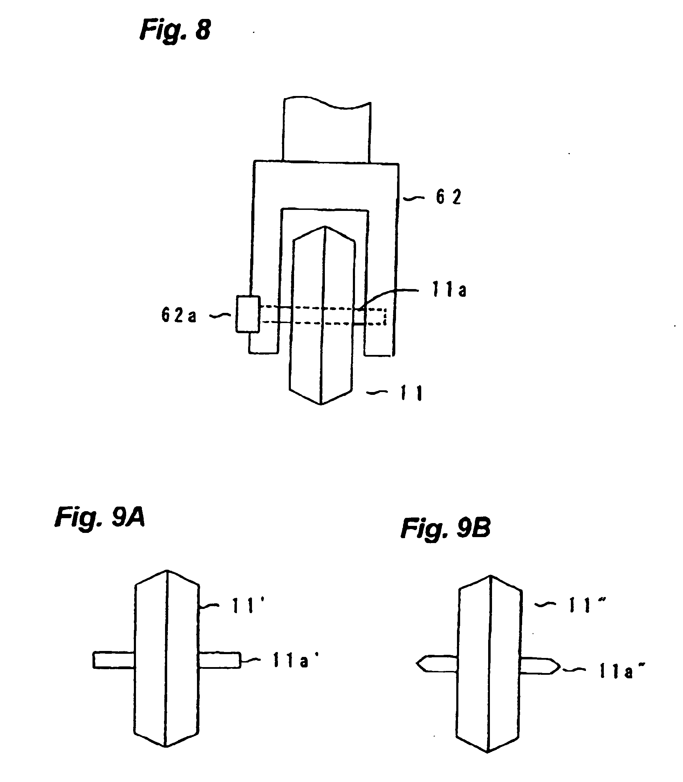

Fig. 8 shows the head 62 shown in Fig. 7. A shaft 11a is inserted through the hole of the cutter wheel 11 or 31, and two ends of the shaft 11a are supported at a two-fork type member of the head 62. A cap 62a stops the shaft 11a.

The cutter wheel 11 or 31 is provided as an element as shown in Figs. 2 and 4. When it is used, a shaft 11a shown in Fig. 8 is inserted to the center hole provided in the wheel 11 or 31. However, because the outer diameter of the wheel is very small, the diameter of the shaft 11a may become equal to or smaller than 1 mm, and it is difficult to handle the shaft. Therefore, as shown in Fig. 9A, a shaft 11a' may be integrated with the main body of the cutter wheel to form a single unit 11'. Alternatively, as shown in Fig. 9B, a pivot shaft 11a" may be integrated with the main body of the cutter wheel to form a single unit 11". The shape of the shaft depends on the structure of the bearing at the cutter head 62.

In the above-mentioned embodiments of the invention, a cutter wheel has a shape of a regular polygon. However, a cutter wheel of a polygon in shape has a similar advantageous feature.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.
A cutter wheel comprises a disk with two side planes and an outer periphery between them. The outer periphery comprises two bevel portions and a ridge portion between them. The ridge portion comprises a plurality of peaks aligned along a circumferential line. For example, the ridge portion comprises a straight line connecting two adjacent peaks in the plurality of peaks. Alternatively, the ridge portion comprises a depression between two adjacent peaks in the plurality of peaks, and the depth of the depression is deeper than the straight line connecting between the two adjacent peaks. Preferably, the peaks are arranged at an equal distance between them.

## Claims

1. A cutter wheel (11, 31) for forming a scribe line on brittle materials by generating a vertical crack, said cutter wheel (11, 31) comprising:
a disk having two side planes and an outer periphery between them, the outer periphery comprising two bevel portions (12) and a ridge portion between them,
**characterized in that** the ridge portion (13) comprises a plurality of vertices aligned along a circumferential line.

2. A cutter wheel (11, 31) according to claim 1, **characterized in that** said plurality of vertices are aligned to have an equal distance between them.

3. A cutter wheel (11) according to claim 1, **characterized in that** each one of said ridge portions (13) extends along each one of straight line connecting each one pair of said two adjacent vertices.

4. A cutter wheel (31) according to claim 1, **characterized in that** for each pair of two adjacent vertices in the plurality of vertices, said ridge portion comprises a depression (14) between each one pair of adjacent vertices, and that the each depression (14) extends lower than each imaginary straight line connecting the two adjacent vertices.

5. A cutter wheel (31) according to claim 4, **characterized in that** a depth of said depression (14) is 0 to 20% of a length of said imaginary straight line connecting said two adjacent vertices.

6. A cutter wheel (11, 31) according to claim 1, **characterized in that** the number of the vertices is between 16 and 300.

7. A cutter wheel (11, 31) according to claim 1, **characterized in that** the circumferential line has a diameter of between 1 to 20 mm.

8. A cutter wheel (11, 31) according to claim 1, **characterized in that** said disk has a thickness of between 0,6 and 5 mm.

9. A cutter wheel (11, 31) according to claim 1, **characterized in that** said two bevel portions (12) make an angle between 90 and 160 degrees in a section perpendicular to said two side planes.

10. A cutter wheel (11, 31) according to claim 1, **characterized in that** said disk has a hole at the center thereof.

11. A cutter wheel (11', 11") according to claim 1, **characterized in that** said disk with a hole at the center thereof, comprises a shaft (11a', 11a") fitted to the hole and integrated with said disk.

12. A cutter wheel (11, 31) according to claim 1, **characterized in that** said vertex does not have a length along the direction of the ridge.

13. An apparatus for forming a scribe line on brittle materials by generating a vertical crack, said apparatus comprising:
a table(41) on which a brittle plate is set; and
a cutter head (46) which moves relative to said table (41), said cutter head (46) setting a cutter wheel (11, 31) in a position to contact the brittle plate, wherein said cutter wheel (11, 31) comprises a disk having two side planes and an outer periphery between them, the outer periphery comprises to bevel portions (12) and a ridge portion (13) between them,
**characterized in that** the ridge portion (13) comprises a plurality of vertices aligned along a circumferential line.

14. A cutter for forming a scribe line on brittle materials by generating a vertical crack, said cutter comprising:
a grip (61) having a holder (62) at an end thereof;
a cutter wheel (11) supported rotatably by said holder (62);
wherein said cutter wheel (11) comprises a disk having two side planes and an outer periphery between them,
the outer periphery comprising two bevel portions (12) and a ridge portion (13) between them,
**characterized in that** the ridge portion (13) comprises a plurality of vertices aligned along a circumferential line.

15. A scribing method for forming a scribe line on brittle materials by generating vertical cracks comprising a step of forming scribe lines on said brittle material by use of a cutter wheel (11) according to one of claims 1 to 12, an apparatus according to claim 13 or a cutter according to claim 14.

## Patentansprüche

1. Schneiderad (11, 31) zum Ausbilden einer Anrisslinie auf spröden Materialien durch Erzeugen eines vertikalen Risses, wobei das Schneiderad (11, 31) aufweist:
eine Scheibe, die zwei Seitenebenen und eine äußere Peripherie zwischen ihnen hat, wobei die äußere Peripherie zwei Schrägabschnitte (12) und einen Kammabschnitt zwischen ihnen aufweist,
**dadurch gekennzeichnet, dass** der Kammabschnitt (13) eine Vielzahl entlang einer Umfangslinie ausgerichteter Scheitelpunkte aufweist.

2. Schneiderad (11, 31) nach Anspruch 1, **dadurch gekennzeichnet, dass** die Vielzahl der Scheitelpunkte ausgerichtet sind, um einen gleichen Abstand zwischen sich zu haben.

3. Schneiderad (11) nach Anspruch 1, **dadurch gekennzeichnet, dass** jeder der Kammabschnitte (13) sich entlang jeder geraden Linie erstreckt, die jedes Paar der zwei benachbarten Scheitelpunkte verbindet.

4. Schneiderad (31) nach Anspruch 1, **dadurch gekennzeichnet, dass** für jedes Paar zwei benachbarter Scheitelpunkte bei der Vielzahl Scheitelpunkte der Kammabschnitt eine Vertiefung (14) zwischen jedem einen Paar benachbarter Scheitelpunkte aufweist, und dass sich jede Vertiefung (14) tiefer erstreckt als jede imaginäre gerade Linie, die die zwei benachbarten Scheitelpunkte verbindet.

5. Schneiderad (31) nach Anspruch 4, **dadurch gekennzeichnet, dass** eine Tiefe der Vertiefung (14) 0 bis 20% einer Länge der imaginären geraden Linie ist, die die zwei benachbarten Scheitelpunkte verbindet.

6. Schneiderad (11, 31) nach Anspruch 1, **dadurch gekennzeichnet, dass** die Zahl der Scheitelpunkte zwischen 16 und 300 ist.

7. Schneiderad (11, 31) nach Anspruch 1, **dadurch gekennzeichnet, dass** die Umfangslinie einen Durchmesser zwischen 1 und 20mm hat.

8. Schneiderad (11, 31) nach Anspruch 1, **dadurch gekennzeichnet, dass** die Scheibe eine Dicke zwischen 0,6 und 5mm hat.

9. Schneiderad (11, 31) nach Anspruch 1, **dadurch gekennzeichnet, dass** die zwei Schrägabschnitte (12) einen Winkel zwischen 90 und 160 Grad in einem zu den zwei Seitenebenen senkrechten Schnitt bilden.

10. Schneiderad (11, 31) nach Anspruch 1, **dadurch gekennzeichnet, dass** die Scheibe ein Loch in ihrer Mitte hat.

11. Schneiderad (11', 11") nach Anspruch 1, **dadurch gekennzeichnet, dass** die Scheibe mit einem Loch in ihrer Mitte eine Welle (11a', 11a") aufweist, die in das Loch eingepasst ist und mit der Scheibe einstückig ist.

12. Schneiderad (11, 31) nach Anspruch 1, **dadurch gekennzeichnet, dass** der Scheitelpunkt keine Länge entlang der Richtung des Kamms hat.

13. Gerät zum Ausbilden einer Anrisslinie auf spröden Materialien durch Erzeugen eines vertikalen Risses, wobei das Gerät aufweist:
einen Tisch (41), auf den eine spröde Platte gesetzt ist; und
einen Schneidekopf (46), der sich relativ zu dem Tisch (41) bewegt, wobei der Schneidekopf (46) ein Schneiderad (11, 31) in eine Position einrichtet, um mit der spröden Platte in Kontakt zu treten, wobei das Schneiderad (11, 31) eine Scheibe aufweist, die zwei Seitenebenen und eine äußere Peripherie zwischen ihnen hat, wobei die äußere Peripherie zwei Schrägabschnitte (12) und einen Kammabschnitt (13) zwischen ihnen aufweist,
**dadurch gekennzeichnet, dass** der Kammabschnitt (13) eine Vielzahl entlang einer Umfangslinie ausgerichteter Scheitelpunkte aufweist.

14. Schneidwerkzeug zum Ausbilden einer Anrisslinie auf spröden Materialien durch Erzeugen eines vertikalen Risses, wobei das Schneidwerkzeug aufweist:
einen Griff (61), der an seinem Ende einen Halter (62) hat;
ein Schneiderad (11), das drehbar durch den Halter (62) gestützt ist;
wobei das Schneiderad (11) eine Scheibe aufweist, die zwei Seitenebenen und eine äußere Peripherie zwischen ihnen hat, und
die äußere Peripherie zwei Schrägabschnitte (12) und einen Kammabschnitt (13) zwischen ihnen aufweist,
**dadurch gekennzeichnet, dass** der Kammabschnitt (13) eine Vielzahl entlang einer Umfangslinie ausgerichteter Scheitelpunkte aufweist.

15. Anreißverfahren zum Ausbilden einer Anrisslinie auf spröden Materialien durch Erzeugen vertikaler Risse, das einen Schritt zum Ausbilden von Anrisslinien auf den spröden Materialien aufweist, unter Verwendung eines Schneiderads (11) nach einem der Ansprüche 1 bis 12, eines Geräts nach Anspruch 13 oder eines Schneidwerkzeugs nach Anspruch 14.

## Revendications

1. Molette coupante (11, 31) permettant de former un chemin de découpage sur des matériaux cassants en générant une fissure verticale, ladite molette coupante (11, 31) comprenant:
un disque ayant deux plans latéraux et une périphérie extérieure entre eux, la périphérie extérieure comprenant deux parties coniques (12) et une partie de crête entre elles,
**caractérisée en ce que** la partie de crête (13) comprend une pluralité de sommets alignés le long d'une ligne circonférentielle.

2. Molette coupante (11, 31) selon la revendication 1,
**caractérisée en ce que** ladite pluralité de sommets sont alignés à égale distance entre eux.

3. Molette coupante (11) selon la revendication 1, **caractérisée en ce que** chacune desdites parties de crête (13) s'étend le long de chaque ligne droite reliant chaque paire desdits deux sommets adjacents.

4. Molette coupante (31) selon la revendication 1, **caractérisée en ce que** pour chaque paire de deux sommets adjacents dans la pluralité de sommets, ladite partie de crête comprend un creux (14) entre chaque paire de sommets adjacents, et que chaque creux (14) s'étend plus bas que chaque ligne droite imaginaire reliant les deux sommets adjacents.

5. Molette coupante (31) selon la revendication 4, **caractérisée en ce qu'**une profondeur dudit creux (14) est de 0 à 20% d'une longueur de ladite ligne droite imaginaire reliant lesdits deux sommets adjacents.

6. Molette coupante (11, 31) selon la revendication 1,
**caractérisée en ce que** le nombre de sommets est compris entre 16 et 300.

7. Molette coupante (11, 31) selon la revendication 1,
**caractérisée en ce que** la ligne circonférentielle a un diamètre compris entre 1 à 20 mm.

8. Molette coupante (11, 31) selon la revendication 1,
**caractérisée en ce que** ledit disque a une épaisseur comprise entre 0,6 et 5 mm.

9. Molette coupante (11, 31) selon la revendication 1,
**caractérisée en ce que** lesdites deux parties coniques (12) font un angle entre 90 et 160 degrés dans un tronçon perpendiculaire auxdits deux plans latéraux.

10. Molette coupante (11, 31) selon la revendication 1,
**caractérisée en ce que** ledit disque a un trou au niveau de son centre.

11. Molette coupante (11', 11" ) selon la revendication 1,
**caractérisée en ce que** ledit disque avec un trou en son centre, comprend un arbre (11a', 11a") ajusté au trou et solidaire dudit disque.

12. Molette coupante (11, 31) selon la revendication 1,
**caractérisée en ce que** ledit sommet de présente pas de longueur dans la direction de la crête.

13. Appareil permettant de former un chemin de découpage sur des matériaux cassants en générant une fissure verticale, ledit appareil comprenant :
une table (41) sur laquelle une plaque cassante est placée ; et
un porte-outil (46) qui se déplace par rapport à ladite table (41), ledit porte-outil (46) fixant une molette coupante (11, 31) dans une position pour contacter la plaque cassante, ou ladite molette coupante (11, 31) comprend un disque ayant deux plans latéraux et une périphérie extérieure entre eux, que la périphérie extérieure comprend deux parties coniques (12) et une partie de crête (13) entre elles,
**caractérisée en ce que** la partie de crête (13) comprend une pluralité de sommets alignés le long d'une ligne circonférentielle.

14. Dispositif de coupe permettant de former un chemin de découpage sur des matériaux cassants en générant une fissure verticale, ledit dispositif de coupe comprenant :
une poignée (61) ayant un support (62) à son extrémité;
une molette coupante (11) soutenue en rotation par ledit support (62) ;
où ladite molette coupante (11) comprend un disque ayant deux plans latéraux et une périphérie extérieure entre eux, et
la périphérie extérieure comprenant deux parties coniques (12) et une partie de crête (13) entre elles,
**caractérisé en ce que** la partie de crête (13) comprend une pluralité de sommets alignés le long d'une ligne circonférentielle.

15. Procédé de découpage permettant de former un chemin de découpage sur des matériaux cassants en générant des fissures verticales comprenant une étape qui consiste à former des chemins de découpage sur ledit matériau cassant en utilisant une molette coupante (11) selon l'une des revendications 1 à 12, un appareil selon la revendication 13 ou un dispositif de coupe selon la revendication 14.
